# EUROPEAN PATENT SPECIFICATION

(11) **EP 4 159 042 B1**
(45) Date of publication and mention of the grant of the patent: **08.04.2026**
(21) Application number: 22157073.2
(22) Date of filing: 16.02.2022
(51) Int. Cl.: A23B 4/30, A23B 7/015, A23B 7/158, A23L 5/20

(54) **COMPACT DEVICE FOR FOOD SANITIZATION**
KOMPAKTE VORRICHTUNG ZUR DESINFEKTION VON LEBENSMITTELN
DISPOSITIF COMPACT DE DÉSINFECTION D'ALIMENTS

(30) Priority: 04.10.2021 IT 202100025421
(43) Date of publication of application: 05.04.2023
(73) Proprietor: Edinnovation S.r.l., 52011 Bibbiena (AR) (IT)
(72) Inventor: Giunipero, Luciano, 10034 Chivasso (TO) (IT); Leporini, Barbara, 55100 Lucca (LU) (IT); Verdi, Gianni, 52015 Stia (AR) (IT); Galesi, Giulio, 56019 Vecchiano (PI) (IT)
(74) Representative: Fanfani, Stefano

(56) References cited:
- WO-A1-2018/090110
- WO-A1-96/16555
- WO-A2-03/078571

## Description

### Technical Field

The present invention belongs to the sector of compact devices for sanitizing food.

More particularly, the present invention belongs to the sector of devices for removing both heavy metals and microorganisms.

### Present status of the art

Various attempts are known to develop devices with which to sanitize foods in a simple and rapid way, especially at home or in restaurants, with particular reference to both the extraction of heavy metals and the reduction of viral and bacterial load by killing these microorganisms.

Patent application CN107594292A describes a method for eliminating toxins (bacteria, viruses and heavy metals) from food through the use of an intermittent high voltage discharge which acts between two electrodes placed inside a container full of water where the food to be treated is placed.

To extract toxins from food, the electrode plates are repeatedly energized in order to ionize the oxygen contained in the water and generate high voltage static electricity in the water (ionized oxygen and static electricity are used to generate free radicals, inactivate microorganisms, kill bacteria, remove harmful substances such as pesticide residues, antibiotics and hormones). After extracting the toxins from the food, repeated discharges are applied, of greater intensity than the previous discharges, for a second detoxification phase and to transport the heavy metals, eliminating them from the food.

In a further possible version of the method, an additional third electrode charging step is further provided, in which the control circuit adjusts the electric power supply to continuously emit a third pulse to the electrode plates, of higher intensity than the previous ones, whose purpose is to electrolyze the water to further reduce the hormones, pesticide residues and other substances present in the food.

In the individual phases, the various harmful substances present in the food are removed separately and in a targeted manner, thus improving the effect of decontamination.

However, the described device has the major drawback of having to ionize the oxygen in the water and this forces the food to be immersed in the water, with the result that the latter can penetrate inside it and in any case can leave evident traces that alter the taste and texture.

In general, immersion solutions do not allow to sanitize food that has already been prepared and ready for consumption.

Furthermore, the fact that the food is completely immersed in a liquid makes it necessary to have a high current intensity for the extraction of cations, which also generates a significant increase in the temperature of the food, damaging its organoleptic qualities.

In fact, the technology with high current electrical impulses is used in the food sector mainly for the sterilization of liquids, such as milk, rather than for solid foods. WO96/16555 employs similar technologies also for solid foods.

### Object and summary of the invention

The purpose of the present invention is to provide a device which, through appropriate treatment cycles, is able to eliminate heavy metals, pesticides and at the same time is able to break down contamination by viruses and bacteria, including salmonella or Escherichia coli, as well as residues of contaminating chemical substances that can constitute a source of pathologies, as they are sources of some serious toxic infections.

In fact, it is known that by purifying food before its in-management, it is possible to largely limit the negative consequences and the need for interventions for treatment and sanitization of the organism.

This purpose is achieved with a device that receives food inside and operates according to different cycles depending on whether you want to obtain:
- the reduction of the concentration of heavy metals from a protein food, preferably raw, such as meat or fish;
- the reduction of the concentration of heavy metals from vegetables or fruit;
- the biological sanitization of food, even after cooking and ready to be served.

The reduction of the concentration of heavy metals in protein foods is essentially a physical process and takes place by investing the food with a pulsating magnetic field that serves to polarize the ferromagnetic cations of heavy metals, such as mercury, in order to permit their displacement by force of the bonds that are formed between the cations and the electrons of an independent and constant electric current flow, the intensity of which is regulated by a special control system which also regulates the delivery of a liquid solution.

Advantageously, a low frequency magnetic flow (in the range of 5 Hz) is closed again by investing the food to be treated without significantly raising its temperature, as instead it occurs in solutions in which the food is crossed by a current circulated between two electrodes; in the latter case, the food becomes a part of the electrical circuit and its resistance forces an important dissipation of energy which results in a transfer of heat to the food itself, raising its temperature.

To permit to remove the cations and consequently reduce the concentration of heavy metals, the food is placed on a plurality of spacers that rise vertically from a lower mat and are electrically conductive in their upper portion while they are electrically insulating in the lower portion, the latter being solidly connected to the lower mat, which is also electrically insulating.

To generate the magnetic field, the device comprises an upper movable plate in which an electric winding is inserted which is excited in a very short time by means of the energy stored in one or more supercapacitors which passes to one or more power Mosfets which generate the current pulse which excites the winding.

According to a particularly performing solution, the winding is made with a cable composed of one or more conductors including copper oxide, earth and silver interlaced.

After placing the food inside the device, the control unit locks the door and makes the upper movable plate go down until the food is reached.

During the descent phase of the upper movable plate, a solenoid valve is activated to spray the food by means of a pump, until the collection tray is filled, a liquid solution is used consisting of water, 1% sodium chloride, mono-sodium carbonate 1% and chlorine dioxide 0.1%, capable of increasing the electrical conductivity and reducing the viral load of the microorganisms present on the food surface.

The excitation of the winding present on the upper plate takes place through a pulse generator with a high energy content. As a non-binding example, it is indicated that the generator must be capable of generating pulses in current of 180 **A,** with a frequency of 5 **Hz;** advantageously, these pulses can be determined by the charge and discharge of one or more supercapacitors, thus creating an electromagnetic pulse of 0.8 T capable of separating the cations bound to the heavy metals present in food.

In this way the cations are extracted from the protein food and transported to the liquid solution contained in the collection tray located at the bottom of the treatment compartment from where, at the end of the cycle, the liquid solution will be aspirated and filtered by a conductive extractable filter, thus eliminating from the clean liquid solution the toxic elements precipitated in it and making it reusable for several cycles.

The transport of cations from the surface of the food to the collection tray takes place thanks to a continuous energy flow of 0.1 A, controlled by the CPU and generated between the upper movable plate and an electrode applied inside the container of the conductive extractable filter.

The food is not immersed in the liquid solution found in the collection tray because it rests on the spacers that protrude from the mat; the free surface of the liquid reaches the level beyond which the spacers become conductive, so that the flow of electric current carries the cations to the liquid solution contained in the tray and from there to the conductive extractable filter.

The delivery of the liquid solution is regulated according to the intensity of the current of the continuous energy flow, in fact when the liquid solution reaches the level above which the spacers become conductive there is a sudden increase in the current, which is detected by the command-and-control unit, which reduces the flow of the liquid solution.

In protein foods, heavy metals are generally found below the surface of the food itself and this requires that the pulsating magnetic field must be powerful enough to cross the surface of the food; instead, inside the vegetables and / or fruit there are few heavy metals, due to the filtering action of the root system of the plants. On the latter foods, heavy metals are found on the surface, mainly due to atmospheric pollution or the water used to irrigate them, or also due to the pesticides used during cultivation.

In this case it is not necessary to apply the magnetic field for the extraction of the cations, but for their removal from the surface of the food the continuous flow of current and the spraying of the food with the liquid solution are sufficient, the latter increases the electrical conductivity and reduces the presence of pesticides and the viral load of microorganisms present on the surface of food by acting on the interruption of the transport of nutrients through the cell wall and not by interrupting a metabolic process.

This washing effect is also amplified by the application of the continuous energy flow controlled by the CPU, which causes the breakdown of the cell membrane of bacteria and viruses, causing their death; by way of non-binding example, it is indicated that an adequate current is of the order of 0.05 **A,** therefore about half of the current applied in the case of protein foods.

The sanitizing treatment of food, on the other hand, differs radically from the previous ones, since it is an essentially biological process in which the food is hit by both an oscillating low-frequency magnetic field, advantageously generated by the same dipole that generates the magnetic field necessary for the reduction of the concentration of heavy metals, and by light radiations with a wavelength ranging from infrared to ultraviolet, emitted by a high intensity LED lamp with pulsating light.

The frequency of the oscillating magnetic field is controlled by a phase-locked loop circuit, commonly known by the acronym **PLL,** in order to synchronize the frequency to resonate with the food to be sanitized.

At each sanitization cycle, the frequency of the oscillating circuit is continuously varied, until the one that maximizes the resonance effect is identified, taking into account the specific food being treated, so as to transfer the greatest possible amount of energy to it with a consequent slight increase of the temperature of the surface of the food, useful for starting the damage and / or inactivation of the microorganisms, which will subsequently be completed by the action of the pulsating light.

The oscillating magnetic field increases the temperature of the microorganisms with a molecular polymerization that brings them into resonance at a frequency lower than that of water molecules while the pulsating light damages the outer membrane of bacterial cells and viruses and the cytoplasm.

Very advantageously, the sanitizing action of pulsating light can be used also when the device is empty, in order to sanitize its inside, without the need to activate the magnetic field.

### Brief description of the drawings

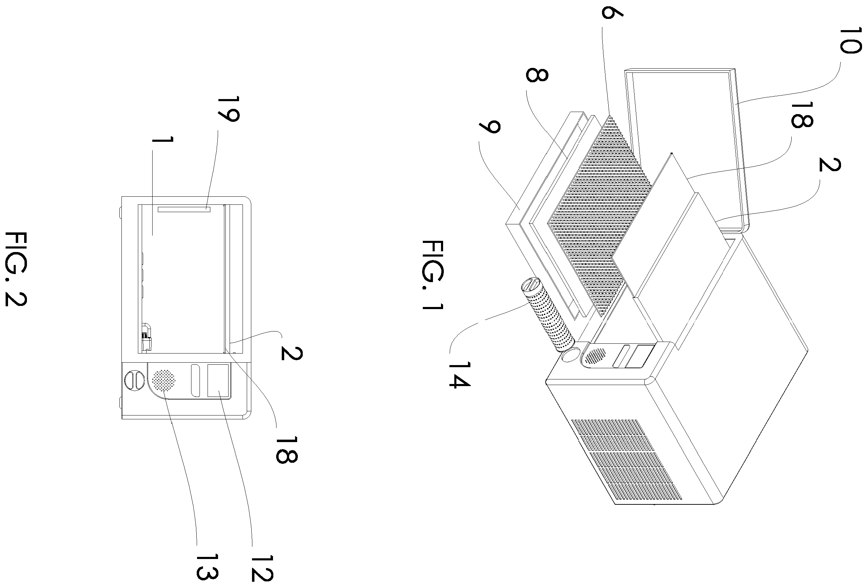

**Figure 1** shows a perspective view of the device with the front door open.
**Figure 2** shows a front view of the device with the front door closed.

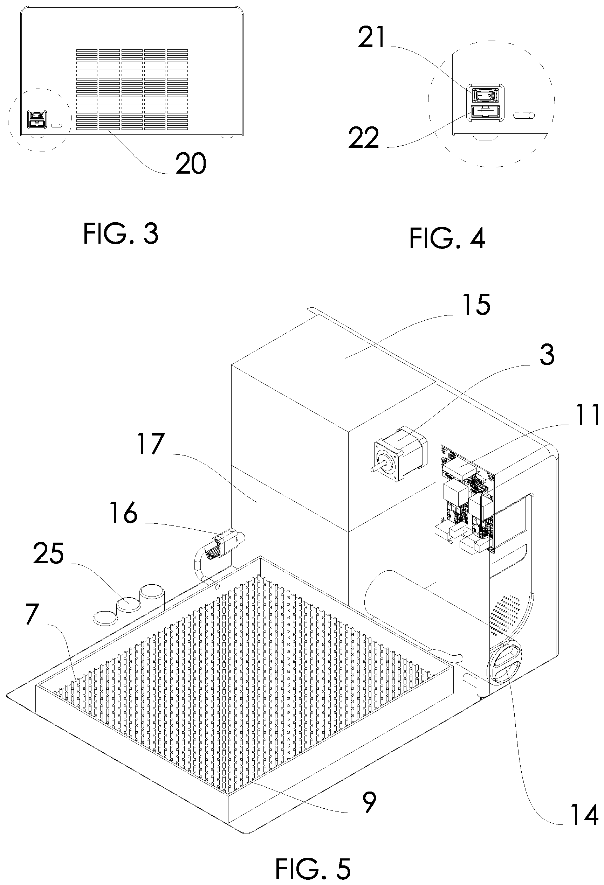

**Figure 3** shows a side view of the device where ventilation grids (20) are visible.
**Figure 4** shows an enlargement of the side view of Figure 3 which shows the power switch (21) and a protection fuse (22).
**Figure 5** shows a perspective view of the interior of the device, with the collection tray indicated(9).

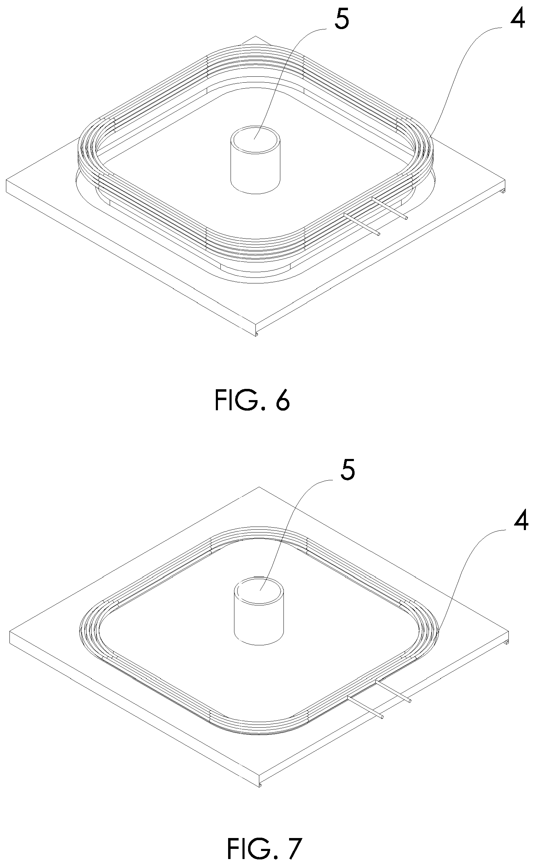

**Figure 6** shows a detail of the upper plate (2) with the winding (4) partially extracted.
**Figure 7** shows a detail of the upper plate (2) with the winding (4) inserted in the housing defined in the upper plate extrados.

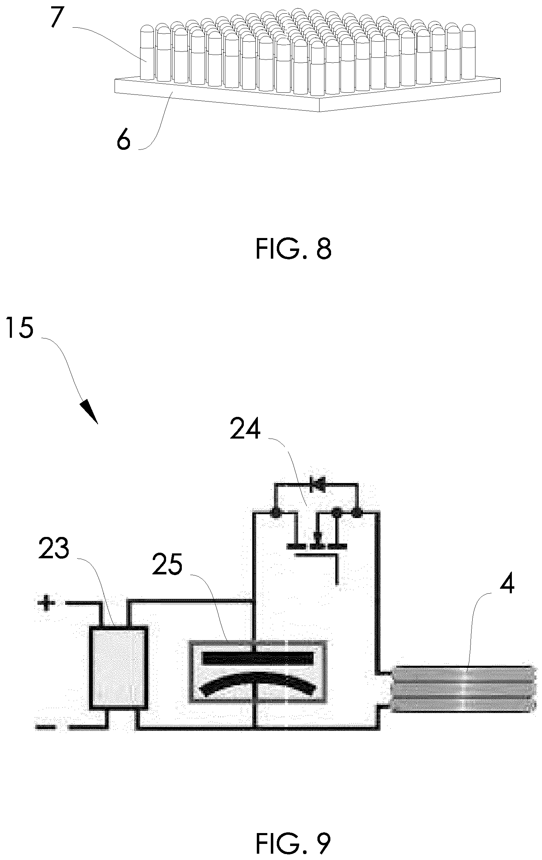

**Figure 8** shows a perspective view of the lower mat (6) and of the spacers (7), on the latter the upper, conductive portion is distinguished from the lower, insulating portion.
**Figure 9** shows the schematic view of the pulse generator of the power and supply unit (15), the figure shows a supercapacitor (25), a supercapacitor charge regulator (23), an impulse command Mosfet (24) and the winding (4).

### Detailed description of an embodiment of the invention

In the embodiment indicated in the figures, the device object of the present invention comprises a treatment compartment (1) delimited by side and bottom walls made of non-magnetic material, inside which an upper plate (2) translates vertically, which comprises an electrical winding (4) with low resistance and impedance; a central liquid diffuser (5); a lower mat (6) equipped with spacers (7) having electrical conductivity on the upper part and on which the food to be treated is placed; a lower magnetic plate (8) underneath the mat (6) and a tray (9) for containing the liquid solution used during the food treatment cycles.

Below said upper plate (2) and close to the intrados of the latter there is a nebulizing conductive plate (18) which serves to transfer the electric current to the food and to start the nebulization of the liquid solution that comes out from the center diffuser (5).

One of the conductors which generate the constant current flow is electrically connected to the nebulizing conductive plate.

According to a practical embodiment, the upper portion of the spacers (7) is made conductive with a coating of graphene.

In the preferred embodiment, the conductive material of which the winding (4) is made includes copper oxide, noble earths and silver.

To reduce the impedance and the resistivity, the winding cable includes a plurality of interlaced conductors, collected inside a high temperature resistant fiberglass sheath; each conductor comprises a silver core, first coated with a compound comprising copper oxide and boron oxide and finally the coating compound is in turn covered with an insulating layer of polyesterimide enamel.

The vertical translation of the upper plate (2) takes place by means of an electric motor (3).

On the front, the device is equipped with a door (10) for the insertion and extraction of food, equipped with an electric lock to lock it during the treatment cycle.

Next to the treatment compartment (1) closed by the door (10) there is a second service compartment, confined to the treatment area, on whose front closing panel are located the cycle command-and-control devices (11), complete with a CPU, display (12) for visualizing the functional status of the apparatus, loudspeaker (13) for voice messages with a potentiometer for adjusting the volume and keys to start the three different treatment cycles (reduction of heavy metals in protein foods, reduction of heavy metals in vegetables and fruit, sanitization of bacteria and viruses). In the front part of the compartment we also find a conductive filter (14), extractable to allow cleaning and replacement, preferably made with a particular technology using carbon-graphene nanotubes, capable of retaining the nanoparticles of the toxic compounds present in the food undergoing treatment. Preferably the conductive filter (14) is shaped as an extractable cylinder of plastic material on whose lateral surface a plurality of holes are defined, the liquid solution enters the conductive filter (14) from one of the base surfaces and exits laterally through the holes.

Layers of filter material are wrapped around the external surface of the cylinder, preferably polyethylene terephthalate (Mylar^{®}) coated with a layer of carbon-graphene nanotubes, these layers of filter material have a predetermined degree of porosity so as not to obstruct the passage of the liquid solution, while retaining the impurities carried by the latter.

Inside the service compartment are housed the power and supply unit (15) of the command-and-control devices of the food treatment cycles, the electric motor (3) for the translation of the movable upper plate, the pump equipped with an electro-valve (16) for the diffusion of the liquid used during the treatment, the liquid tank (17) and the supercapacitors (25) capable of storing and making available in a very short time a large amount of energy, energy used for the excitation of the coil of the winding (4) inserted in the upper plate of the device.

In addition to what is needed for the food sanitization, the present invention comprises a specific system for sanitizing its internal compartment, taking into account the fact that after having extracted the sanitized food, some residues could still remain inside the machine which, if not removed with normal cleaning operations, could contaminate the device with germs and bacteria. For this purpose, a lighting system has been introduced with different series of pulsating light lamps (19), preferably of white and blue of 3V and 20mA; these lamps, preferably, remain active also after the food has been sanitized to allow constant disinfection of the device, with a continuous consumption of low-absorption energy, ensuring greater hygiene as well as preventing the formation of odours.

The flow control of the liquid solution takes place by measuring the electric current flowing between the nebulizing conductive plate and the conductive filter (14), in order to convey the products removed from the food towards the tray. In particular, the command-and-control unit continuously measures the quantity of current that flows instantaneously and detects when the latter rises suddenly because the level of the liquid solution in the collection tray has reached the level of the graphene coating of the spacers (6).

## Claims

1. Device for removing heavy metals and micro-organisms from food comprising a box-like container in which a food treatment compartment (1) is defined, made of non-magnetic material, **characterized in that** inside said treatment compartment (1) the following elements are housed:
- an upper plate (2) that translates vertically under the action of an electric motor (3) transmitted by suitable motion transmission means;
- an electric winding (4) integrally connected to the extrados of said upper plate (2);
- a nebulizing conductive plate (18) placed below said upper plate (2) and integrally connected close to the intrados of the latter;
- at least one diffuser (5), suitable for spraying a liquid solution inside said treatment compartment (1);
- a lower mat (6) of insulating material, placed on the bottom of said treatment compartment (1) and from the extrados of which a plurality of spacers (7) rise, the upper portion of which is superficially conductive of electricity while the lower portion is electrically insulating;
- a lower magnetic plate (8) placed under said lower mat (6);
- a collection tray (9) suitable for containing a liquid;
- a pulsating light lamp (19);
**and in that** that said treatment compartment (1) is accessible through a front door (10), for the insertion and extraction of food; said box-like container comprising the following elements:
- a tank (17) for the accumulation of a liquid solution;
- a system for filtering and transferring a liquid from said collection tray (9) to said tank (17);
- a pump (16) inserted in said system for filtering and transferring a liquid;
- a conductive filter (14) reversibly inserted in said system for filtering and transferring a liquid upstream of said tank (17);
- a system for controlling the flow of the liquid solution by measuring the flow of the quantity of current flowing between said nebulizing conductive plate (18) and said conductive filter (14);
- a power and supply unit (15) which feeds said winding (4);
- a command-and-control unit (11);
- a user interface.

2. Device according to the preceding claim, **characterized in that** said power and supply unit (15) comprises at least: a supercapacitor (25), a supercapacitor charge regulator (23) and a Mosfet (24) to command the impulse.

3. Device according to one of the preceding claims, **characterized in that** said winding (4) comprises one or more conductors collected inside a fiberglass sheath resistant to high temperatures, each conductor comprising a core made of silver, first coated with a compound comprising copper oxide and boron oxide, in turn externally covered with an insulating layer of polyesterimide enamel.

4. Device according to one of the preceding claims, **characterized in that** said liquid solution contained in said tank (17) comprises water, sodium chloride from 5% to 0.2%, monosodium carbonate from 5% to 0.2% and chlorine dioxide from 0.5% to 0.02%.

5. Device according to the preceding claim **characterized in that** said liquid solution contained in said tank (17) comprises water, 1% sodium chloride, 1% monosodium carbonate and 0.1% chlorine dioxide.

## Patentansprüche

1. Vorrichtung zum Entfernen von Schwermetallen und Mikroorganismen aus Lebensmitteln, bestehend aus einem kastenartigen Behälter, in dem ein Lebensmittelbehandlungsfach (1) aus nichtmagnetischem Material definiert ist, **dadurch gekennzeichnet, dass** im Inneren des Behandlungsfachs (1) die folgenden Elemente untergebracht sind:
- eine obere Platte (2), die sich unter der Wirkung eines Elektromotors (3), der über geeignete Bewegungsübertragungsmittel angetrieben wird, vertikal verschiebt;
- eine elektrische Wicklung (4), die integral mit der Oberseite der oberen Platte (2) verbunden ist;
- eine nebulisierende leitfähige Platte (18), die unterhalb der oberen Platte (2) angeordnet und integral mit dieser nahe ihrer Innenseite verbunden ist;
- mindestens ein Diffusor (5), der zum Versprühen einer flüssigen Lösung innerhalb des Behandlungsraums (1) geeignet ist;
- eine untere Matte (6) aus isolierendem Material, die auf dem Boden des Behandlungsfachs (1) angeordnet ist und von deren Oberseite mehrere Abstandshalter (7) abstehen, deren oberer Teil oberflächlich elektrisch leitfähig ist, während der untere Teil elektrisch isolierend ist;
- eine unter der unteren Matte (6) angeordnete untere Magnetplatte (8);
- eine Auffangschale (9), die zur Aufnahme einer Flüssigkeit geeignet ist;
- eine pulsierende Lampe (19);
**und dadurch,** dass das Behandlungsfach (1) durch eine Fronttür (10) zugänglich ist, um Lebensmittel einzulegen und herauszunehmen. Der genannte kastenartige Behälter umfasst die folgenden Elemente:
- einen Behälter (17) zum Sammeln einer flüssigen Lösung;
- ein System zum Filtern und Übertragen einer Flüssigkeit aus der Auffangwanne (9) in den Behälter (17);
- eine in das System eingesetzte Pumpe (16) zum Filtern und Fördern einer Flüssigkeit;
- einen leitfähigen Filter (14), der reversibel in das System eingesetzt ist, um eine Flüssigkeit stromaufwärts des Behälters (17) zu filtern und zu übertragen;
- ein System zur Steuerung des Flusses der flüssigen Lösung durch Messung des Flusses der zwischen der zerstäubenden leitfähigen Platte (18) und dem leitfähigen Filter (14) fließenden Strommenge;
- eine Stromversorgungs- und Speiseeinheit (15), die die Wicklung (4) speist;
- eine Befehls- und Steuereinheit (11);
- eine Benutzeroberfläche.

2. Vorrichtung gemäß dem vorstehenden Anspruch, **dadurch gekennzeichnet, dass** die Stromversorgungs- und Speiseeinheit (15) mindestens umfasst: einen Superkondensator (25), einen Superkondensator-Laderegler (23) und einen Mosfet (24) zum Steuern des Impulses.

3. Vorrichtung gemäß einem der vorstehenden Ansprüche, **dadurch gekennzeichnet, dass** die Wicklung (4) einen oder mehrere Leiter umfasst, die in einer hochtemperaturbeständigen Glasfaserummantelung eingefasst sind, wobei jeder Leiter einen Kern aus Silber umfasst, der zunächst mit einer Verbindung aus Kupferoxid und Boroxid beschichtet und anschließend außen mit einer Isolierschicht aus Polyesterimid-Lack überzogen ist.

4. Vorrichtung nach einem der vorstehenden Ansprüche, **dadurch gekennzeichnet, dass** die in dem Behälter (17) enthaltene flüssige Lösung Wasser, 5 % bis 0,2 % Natriumchlorid, 5 % bis 0,2 % Mononatriumcarbonat und 0,5 % bis 0,02 % Chlordioxid umfasst.

5. Vorrichtung gemäß dem vorstehenden Anspruch, **dadurch gekennzeichnet, dass** die in dem Behälter (17) enthaltene flüssige Lösung Wasser, 1 % Natriumchlorid, 1 % Mononatriumcarbonat und 0,1 % Chlordioxid umfasst.

## Revendications

1. Dispositif pour l'élimination des métaux lourds et des micro-organismes des aliments, comprenant un conteneur en forme de boîte dans lequel est défini un compartiment de traitement des aliments (1), réalisé en matériau non magnétique, **caractérisé en ce qu'**à l'intérieur dudit compartiment de traitement (1) sont logés les éléments suivants :
- une plaque supérieure (2) se déplaçant verticalement sous l'action d'un moteur électrique (3), transmis par des moyens appropriés de transmission de mouvement ;
- un enroulement électrique (4) solidairement relié à l'extrados de ladite plaque supérieure (2) ;
- une plaque conductrice de nébulisation (18) placée au-dessous de ladite plaque supérieure (2) et solidairement reliée à proximité de l'intrados de celle-ci ;
- au moins un diffuseur (5), apte à pulvériser une solution liquide à l'intérieur dudit compartiment de traitement (1) ;
- un tapis inférieur (6) en matériau isolant, disposé sur le fond dudit compartiment de traitement (1) et de l'extrados duquel s'élève une pluralité d'entretoises (7), dont la partie supérieure est superficiellement conductrice d'électricité tandis que la partie inférieure est électriquement isolante ;
- une plaque magnétique inférieure (8) disposée sous ledit tapis inférieur (6) ;
- un bac de collecte (9) apte à contenir un liquide ;
- une lampe à lumière pulsée (19) ;
**et en ce que** ledit compartiment de traitement (1) est accessible par une porte frontale (10), pour l'introduction et l'extraction des aliments ; ledit conteneur en forme de boîte comprenant les éléments suivants :
- un réservoir (17) pour l'accumulation d'une solution liquide ;
- un système de filtration et de transfert d'un liquide depuis ledit bac de collecte (9) vers ledit réservoir (17) ;
- une pompe (16) insérée dans ledit système de filtration et de transfert d'un liquide ;
- un filtre conducteur (14) inséré de manière réversible dans ledit système de filtration et de transfert d'un liquide en amont dudit réservoir (17) ;
- un système de contrôle du débit de la solution liquide par mesure du flux de la quantité de courant circulant entre ladite plaque conductrice de nébulisation (18) et ledit filtre conducteur (14) ;
- une unité d'alimentation électrique (15) alimentant ledit enroulement (4) ;
- une unité de commande et de contrôle (11) ;
- une interface utilisateur.

2. Dispositif selon la revendication précédente, **caractérisé en ce que** ladite unité d'alimentation électrique (15) comprend au moins : un supercondensateur (25), un régulateur de charge de supercondensateur (23) et un MOSFET (24) destiné à commander l'impulsion.

3. Dispositif selon l'une quelconque des revendications précédentes, **caractérisé en ce que** ledit enroulement (4) comprend un ou plusieurs conducteurs regroupés à l'intérieur d'une gaine en fibre de verre résistante aux hautes températures, chaque conducteur comprenant une âme en argent, d'abord revêtue d'un composé comprenant de l'oxyde de cuivre et de l'oxyde de bore, elle-même recouverte extérieurement d'une couche isolante en émail de polyesterimide.

4. Dispositif selon l'une quelconque des revendications précédentes, **caractérisé en ce que** ladite solution liquide contenue dans ledit réservoir (17) comprend de l'eau, du chlorure de sodium de 5 % à 0,2 %, du carbonate monosodique de 5 % à 0,2 % et du dioxyde de chlore de 0,5 % à 0,02 %.

5. Dispositif selon la revendication précédente, **caractérisé en ce que** ladite solution liquide contenue dans ledit réservoir (17) comprend de l'eau, 1 % de chlorure de sodium, 1 % de carbonate monosodique et 0,1 % de dioxyde de chlore.
